Europäisches Patentamt

European Patent Office

Office européen des brevets

(19)

(11) Numéro de publication: **0 004 497**
**B1**

(12) **FASCICULE DE BREVET EUROPEEN**

(45) Date de publication du fascicule de brevet: **12.08.81**

(51) Int. Cl.³: **H 04 M 3/22, H 04 M 15/00**

(21) Numéro de dépôt: **79400155.2**

(22) Date de dépôt: **09.03.79**

(54) Appareil analyseur de trafic de postes téléphoniques publics et installation de télésurveillance pour analyser le trafic de postes téléphoniques publics desservis par une pluralité de centraux téléphoniques.

(30) Priorité: **14.03.78 FR 7807329**

(43) Date de publication de la demande:
**03.10.79 Bulletin 79/20**

(45) Mention de la délivrance du brevet:
**12.08.81 Bulletin 81/32**

(84) Etats Contractants Désignés:
**BE CH DE GB IT SE**

(56) Documents cités:
**DE - A - 1 487 898**
**COMMUTATION ET ELECTRONIQUE, no. 49, avril 1975**
**Paris**
**H. TAZEROUT et al.: "Appareil de surveillance et de maintenance des organes dans les équipements électromécaniques Projet Asmodée" pages 67—78**
**PROC. NATIONAL ELECTRON CONFERENCE Vol. 31, 1977**
**OAK BROOM**
**W.B. SMITH: "Remote Surveillance of Switching Offices", pages 17—22**

**TELECOMMUN. AND RADIO ENGIN. Vol. 32/33, no. 1, jan. 1978**
**WASHINGTON**
**I.M. GUBRENKO et al.: "Automatic Switching-Remote Control of Type AMT and AMT—69 Pay Telephones" pages 39—43**

(73) Titulaire: **Serres, Bernard**
**51, avenue de la Paix**
**F-94260 Fresnes (FR)**
(73) Titulaire: **Viale, Maurice**
**174, boulevard Jean Mermoz**
**F-94150 Chevilly-La-Rue (FR)**
(73) Titulaire: **Jewiarz, Edouard**
**13, route de L'Abbaye**
**F-91190 Gif-Sur-Yvette (FR)**

(72) Inventeur: **Serres, Bernard**
**51, avenue de la Paix**
**F-94260 Fresnes (FR)**
Inventeur: **Viale, Maurice**
**174, boulevard Jean Mermoz**
**F-94150 Chevilly-La-Rue (FR)**
Inventeur: **Jewiarz, Edouard**
**13, route de L'Abbaye**
**F-91190 Gif-Sur-Yvette (FR)**

(74) Mandataire: **Martinet, René et al,**
**Cabinet Martinet 62, rue des Mathurins**
**F-75008 Paris (FR)**

Courier Press, Leamington Spa, England.

## Appareil analyseur de trafic de postes téléphoniques publics et installation de télésurveillance pour analyser le trafic de postes téléphoniques publics desservis par une pluralité de centraux téléphoniques

La presente invention concerne un appareil analyseur de trafic de postes téléphoniques publics comprenant, associés à chaque poste, des moyens pour détecter les impulsions de taxe transmises sur les fils de taxe alloués au poste au niveau de son central de rattachement et des moyens pour compter les impulsions de taxe détectées. Elle concerne également une installation de télésurveillance mettant en oeuvre une partie ou tout de tels appareils, pour analyser le trafic de postes téléphoniques publics desservis par une pluralité de centraux téléphoniques.

Plus particulièrement, l'invention concerne l'analyse du trafic de postes téléphoniques généralement intégrés dans des cabines mises à la disposition du public et caractérisés essentiellement par un trafic de départ. Ces postes téléphoniques publics sont généralement à encaissement ou à prépaiement.

Il est déjà connu, par exemple, par la demande de brevet allemand publiée DE - A - 1.487.898, un appareil pour observer le trafic d'un nombre déterminé ou groupe de lignes parmi la pluralité de lignes téléphoniques d'abonnés desservies par un unique central téléphonique. Les lignes de ce groupe sont sélectionnées en fonction du type de la communication téléphonique qu'elles transmettent. Ce critère distinctif sélectionne par exemple une communication locale et une communication lointaine, ou plus précisément, les tarifications de la communication correspondant aux différentes périodes d'impulsions de taxe. Cependant un tel appareil est destiné à indiquer l'intensité du trafic moyenne d'un même type de communications pour un groupe de lignes téléphoniques déterminé. En effet, il n'y a pas analyse de l'intensité du trafic de chaque ligne à observer mais uniquement calcul de cette intensité. Ce calcul est effectué au moyen d'un dispositif de sommation qui compte le nombre d'impulsions de taxe de toutes les communications de même type pendant des durées successives d'observation de même durée qui est, par ailleurs, indépendante du trafic des lignes observées. Le trafic est donc observé globalement pour un groupe de lignes.

Dès maintenant, on notera que l'analyse du trafic de postes téléphoniques selon l'invention est basée sur l'interprétation et l'enregistrement du nombre d'impulsions de taxe émises à partir d'un central de rattachement vers un poste téléphonique après l'établissement d'une communication à partir du poste. Une telle analyse n'est pas fondée, comme dans la plupart des appareils analyseurs de trafic connus, sur l'observation des signaux de supervision émis à partir du central téléphonique de rattachement lors de l'établissement d'une communication, afin de détecter des défauts inhérents au fonctionnement de circuits intermédiaires, tels que joncteurs et lignes téléphoniques, entre les postes demandeur et demandé'. A cet égard, on pourra se reporter par exemple à l'article de H. TAZEROUT et al., paru dans la revue "COMMUTATION ET ELECTRONIQUE", n° 49, avril 1975, pages 67 à 78 et à l'article de I. M. GUBRENKO et al., paru dans la revue "TELECOMMUNICATION AND RADIO ENGINEERING, vol. 32/33, No. 1, janvier 1978, pages 35 à 43.

Actuellement, la signalisation des postes téléphoniques publics en panne ou en dérangement est effectuée par les usagers au moyen de numéro d'appel des réclamations actuellement en vigueur, ou par les releveurs des caisses de ces appareils, ou bien encore par les agents affectés par exemple au central téléphonique de rattachement de ces postes. Le fait que la signalisation du dérangement de ces postes téléphoniques ne soit pas concentrée et qu'elle soit différée dans la plupart des cas de plusieurs jours, contribue à maintenir un grand nombre de ces postes en état de non-utilisation ou de mauvais fonctionnement avant que le service de maintenance soit avisé.

Par conséquent, il apparaît nécessaire d'améliorer la surveillance des postes téléphoniques publics en fournissant de manière permanente ou périodiquement des indications sur le fonctionnement de ces postes téléphoniques.

La présente invention a pour but de fournir un appareil analyseur de trafic d'une pluralité de postes téléphoniques publics desservis par au moins un central téléphonique qui, par comparaison du nombre de taxes écoulées pendant une période prédéterminée à des paramètres prédétérminés pour chaque poste téléphonique, permet de déceler les anomalies de fonctionnement telles que des encaissements à tort ou des fraudes des postes surveillés.

A cette fin, un appareil analyseur de trafic du type défini dans l'entrée en matière et conforme à l'invention est caractérisé en ce qu'il comprend des moyens pour mémoriser les adresses des postes, des limites de comparaison (CMAX, CMIN) aux comptes de taxes, (C) des postes et les durées $(\Delta T)$ de périodes d'observation des postes téléphoniques, des moyens d'horodatage pour détecter périodiquement la fin (HF) de chacune des périodes d'observation de chaque poste, des moyens d'analyse des comptes de taxe reliés sélectivement aux sorties des moyens de comptage sous la commande des moyens d'horodatage pour comparer chaque compte de taxe (C) comptabilisé dans les moyens de comptage d'un poste au moins à deux limites de compte (CMAX, CMIN) spécifiques audit poste à la fin d'une période d'observation dudit poste et des moyens de codage reliés aux moyens de comparaison pour produire un signal codé indiquant le type de fonctionnement anormal du poste lorsque son compte de taxe (C) est supérieur à l'une (CMAX) ou inférieur á l'autre (CMIN) des limites de compte spécifiques audit poste.

Avantageusement, l'appareil analyseur de trafic permet de comparer chaque compte de taxe analysé à l'unité afin d'en déduire si le poste téléphonique est hors service.

L'analyse du trafic du poste d'une cabine téléphonique est basée, conformément à l'invention, sur l'interprétation du nombre d'impulsions de télétaxe reçues par le poste téléphonique et égal à celui enregistré par le compteur de taxe associé au central de rattachement pendant une période d'observation prédéterminée ΔT. Cette interprétation est évaluée en dépendance de considérations générales d'exploitation des postes téléphoniques publics telles que:

— en régime établi et pour un environnement donné, le trafic écoulé par un poste téléphonique est relativement constant, c'est-à-dire que son intensité de trafic moyenne est constante.;

— si un poste téléphonique est hors service, son trafic est nul.;

— si un poste téléphonique ne peut remplir correctement toutes ses fonctions, son trafic est très faible ou très élevé.

A partir d'observations périodiques préalables de l'ordre de 24 heures à trois jours pendant une durée d'au moins un mois par exemple, qui sont effectuées par exemple au moyen de l'appareil analyseur de trafic, il est possible de déterminer relativement à chaque poste téléphonique des limites minimale et maximale de compte d'impulsions de télétaxe pour une période d'observation prédéterminée ΔT. Un compte de taxe entre ces limites justifie l'écoulement normal du trafic du poste téléphonique. Ceci revient à déterminer pour chaque poste téléphonique l'intensité de trafic moyenne C̄ le caractérisant.

A partir de ces résultats, chaque poste téléphonique est affecté à un groupe d'analyse de comptes de taxes. Chaque group comporte une liste d'adresses de postes téléphoniques dont les intensités de trafic moyennes C̄ sont comprises entre deux limites C̄MAX et C̄MIN et dont les comptes de taxe C seront successivement comparées à deux valeurs prédéterminées CMAX et CMIN après chaque période d'observation ΔT du groupe. Après détection de la fin (HF) de la période d'observation ΔT assignée au groupe, les moyens d'horodatage initialisent la comparaison du compte de taxe C aux limites de compte minimale et maximale (CMIN, CMAX) assignées au groupe et à l'unité. Si le compte de taxe C est compris entre les limites minimale et maximale, c'est-à-dire si le trafic du poste est normal, aucune information n'est transmise par l'appareil analyseur de trafic ou éventuellement un signal "rien à signaler" est transmis par l'appareil. Au contraire, si le compte de taxe C mémorisé n'est pas dans la plage de ces limites minimale et maximale, l'appareil analyseur de trafic transmet, conjointement à l'adresse du poste et au compte de taxe, l'une des trois informations sous la forme d'un signal codé qui correspond à un trafic nul, à un trafic faible ou à un trafic élevé. Il peut transmettre également au moins l'une des informations concernant l'adresse du groupe auquel est affecté le poste, l'intensité de trafic moyenne du poste, certaines caractéristiques définissant le groupe, la date et l'heure de la fin de la période d'observation. Ces informations sont transmises à un dispositif d'affichage tel qu'une imprimante ou une console de visualisation intégrée à l'appareil analyseur et/ou à un terminal de surveillance et de traitement des informations du genre télétype relié à l'appareil analyseur par voie téléphonique spécialisée ou du réseau commuté.

Localement, les agents rattachés au central interprètent les résultats des observations tandis que, à distance, le terminal permet d'effectuer automatiquement l'analyse du trafic des postes téléphoniques rattachés à plusieurs centraux qui disposent chacun d'un appareil analyseur de trafic conforme à l'invention.

Avantageusement, afin de tenir compte de l'évolution régulière du trafic de chaque appareil téléphonique, l'appareil analyseur de trafic conforme à l'invention permet de changer à tout instant l'affectation d'un poste téléphonique relativement aux listes d'adresses associées aux groupes lorsque l'intensité de trafic moyenne C̄ du poste a subi une certaine évolution. Les différentes modifications des paramètres de comparaison et d'affectation sont fondées sur les observations précédentes afin de ne pas signaler à tort des postes téléphoniques en bon état de fonctionnement lorsque ceux-ci tendent à présenter un trafic plus faible ou plus élevé après un certain nombre de périodes d'observation. Ceci résulte, par exemple, d'une signalisation à tort du mauvais fonctionnement du poste téléphonique répétée plusieurs fois suivie de la vérification in situ de la bonne marche du poste.

Comme déjà dit, l'invention a également trait à une installation de télésurveillance pour analyser le trafic de postes téléphoniques publics desservis par une pluralité de centraux téléphoniques. Une telle installation permet de collecter toutes les informations d'analyse des comptes de taxes relatives à des postes dispersés géographiquement.

Selon une première réalisation, pour laquelle le nombre élevé de postes téléphoniques desservis par un même central justifie l'emploi d'un appareil analyseur, l'installation de télésurveillance est caractérisée en ce qu'elle comprend, associé à chaque central, un appareil analyseur conforme à l'invention, tel que défini ci-dessus, pour analyser les comptes de taxe des postes desservis par le central, ainsi qu'un terminal recevant des appareils analyseurs de trafic, à travers des voies téléphoniques bidirectionnelles, au moins le résultat des comparaisons de chaque compte de taxe aux limites de compte spécifiques auxdits postes. Dans ce cas, le terminal comprend des moyens pour commander, à travers les voies téléphoniques, lesdits moyens d'affectation des appareils analyseurs de trafic en vue de modifier l'affectation des postes relativement aux groupes et au moins les moyens de comptage en vue de transmettre en temps réel au terminal les comptes de taxe.

Selon une second réalisation, l'installation surveille des postes téléphoniques très dispersés géographiquement, c'est-à-dire dispersés en petits groupes rattachés à de nombreux centraux téléphoniques. Une telle installation pour analyser le trafic de postes téléphoniques desservis par une pluralité de premiers centraux téléphoniques, ceux-ci étant desservis par des seconds centraux télé- ,phoniques, est caractérisée en ce qu'elle comprend des moyens de détection d'impulsions de taxe des postes rattachés à un premier, resp. second central qui sont inclus dans des premiers moyens pour transmettre à travers une première voie téléphonique l'adresse dudit premier, resp. second central et l'adresse de l'un desdits postes en réponse à la détection d'une impulsion de taxe allouée audit poste, des moyens de comptage d'impulsions de taxe allouée aux postes desservis par les premiers centraux desservis par un second central, resp. par un second central qui sont inclus dans des seconds moyens reliés au second central pour commander l'incrémentation des moyens de comptage associés à chaque poste en réponse à la détection de l'adresse dudit poste et de l'adresse du premier, resp. second central desservant ledit poste, et un appareil analyseur de trafic des postes, ledit appareil comprenant des moyens de mémorisation, des moyens d'horodatage, des moyens d'analyse des comptes de taxe et des moyens de codage conformes à ceux de l'appareil analyseur de trafic selon l'invention, et, éventuellement, des moyens de répartition et d'analyse, des moyens de transmission, et des moyens de visualisation conformes à ceux de l'appareil analyseur de trafic selon l'invention, lesdits moyens d'analyse recevant successivement le compte de taxe à partir des moyens de comptage sous la commande des moyens d'horodatage à travers des secondes voies téléphoniques bidirectionnelles.

D'autres avantages de la présente invention apparaîtront plus clairement à la lecture de la description qui suit de plusieurs réalisations et à l'examen des dessins annexés correspondants, dans lesquels:

— la Fig. 1 est un bloc-diagramme schématique d'un appareil analyseur de trafic qui, selon une première réalisation conforme à l'invention, est un appareil analysant les comptes de taxe de postes téléphoniques rattachés à un central téléphonique commun;

— la Fig. 2 est un bloc-diagramme détaillé du circuit de répartition des postes téléphoniques en vue de leur affectation dans des groupes d'analyse, inclus dans l'appareil montré à la Fig. 1;

— la Fig. 3 est un bloc-diagramme détaillé du circuit d'initialisation d'analyse de trafic inclus dans l'appareil montré à la Fig. 1;

— la Fig. 4 est un bloc-diagramme détaillé du circuit d'analyse de trafic et du circuit de transmission de données inclus dans l'appareil montré à la Fig. 1;

— la Fig. 5 montre schématiquement l'organisation d'une installation de télésurveillance de trafic comprenant une pluralité d'appareils selon la Fig. 1;

— la Fig. 6 montre schématiquement l'organisation d'une installation de télésurveillance selon une seconde réalisation conforme à l'invention, pour analyser le trafic de postes téléphoniques repartis dans des zones très éloignées;

— la Fig. 7 est un bloc-diagramme schématique d'un transmetteur local propre à détecter des impulsions de taxe et inclus dans l'installation selon la Fig. 6; et

— la Fig. 8 est un block-diagramme schématique d'un transmetteur de surveillance propre à comptabiliser des impulsions de taxe et inclus dars le système selon la Fig. 6.

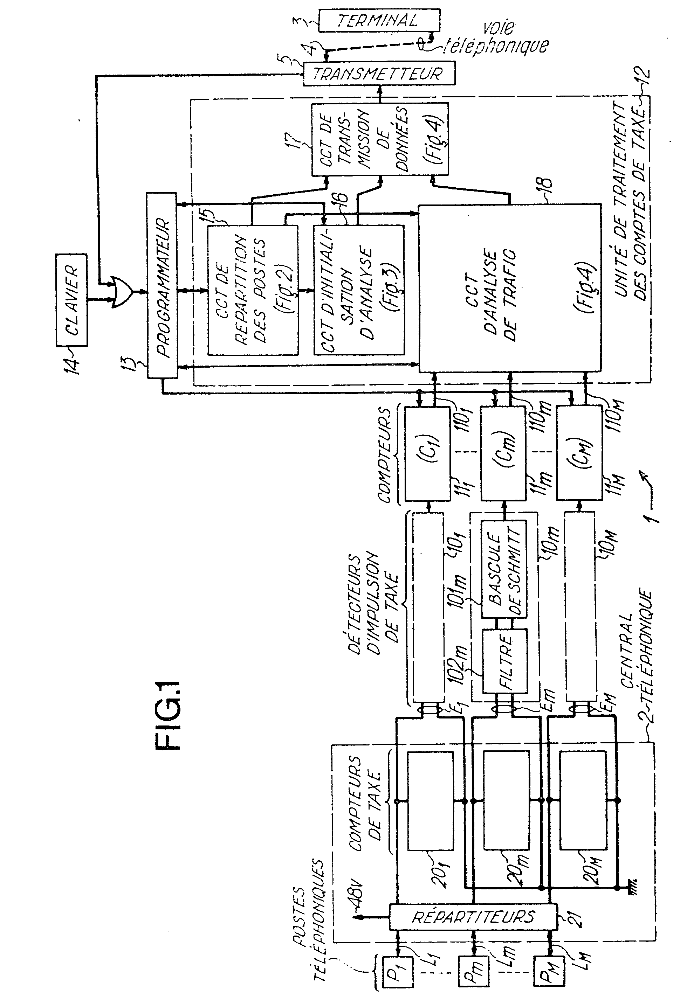

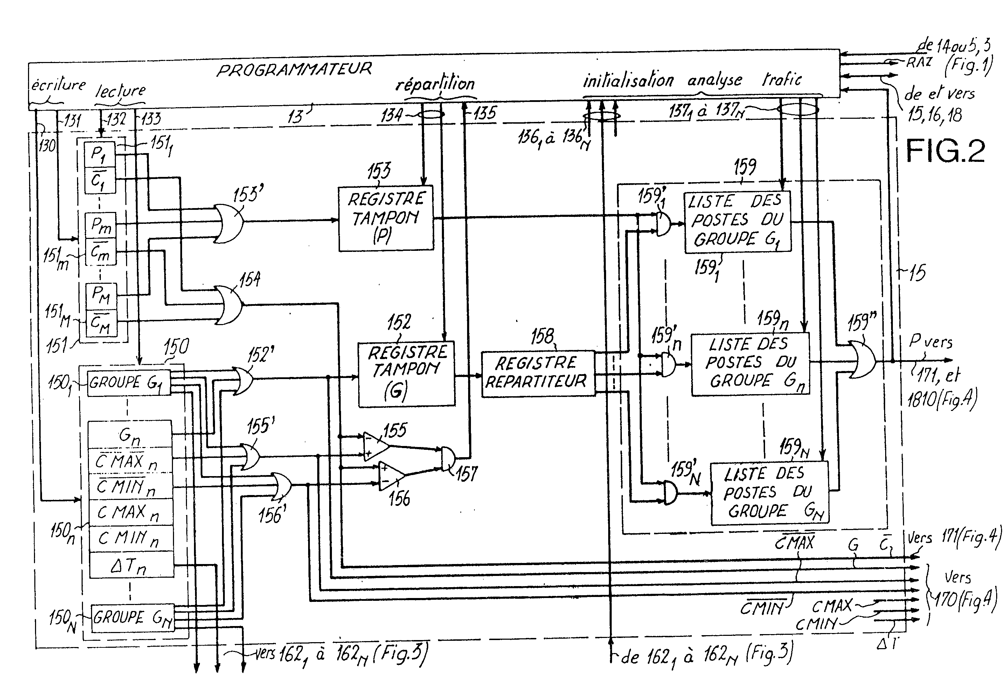

Selon la réalisation illustrée à la Fig. 1, l'appareil analyseur de trafic est un appareil portable 1 destiné à analyser le trafic de $M$ postes téléphoniques publics $P_1$ à $P_M$ qui sont desservis à travers leurs lignes d'abonné $L_1$ à $L_M$ par un central téléphonique commun 2. Les paires de bornes d'entrées $E_1$ à $E_M$ de l'appareil sont reliées en parallèle aux bornes des compteurs de taxe $20_1$ à $20_M$ du central qui transmettant les impulsions de télétaxe aux postes téléphoniques $P_1$ à $P_M$ à travers les répartiteurs 21 du central 2. Chaque paire $E_1$ à $E_M$ a un fil relié à la masse ou potentiel de référence du central 2 et un fil relié à la borne de batterie négative du central 2 à —48 volts à travers les répartiteurs 21. Selon un autre mode de transmission des impulsions de télétaxe et d'organisation du central, certaines paires de fils de taxe $E_1$ à $E_M$ peuvent être reliées respectivement aux fils des lignes $L_1$ à $L_M$ desservant les postes $P_1$ à $P_M$ respectivement. Selon ce dernier cas, le compteur de taxe $20_1$ à $20_M$ peut être supprimé.

Du côté réception des impulsions de télétaxe, l'appareil analyseur de trafic 1 comporte, relié à chaque paire de fils de taxe $E_1$ à $E_M$, un détecteur d'impulsions de taxe $10_1$ à $10_M$ dont la sortie est reliée à l'entrée d'un compteur de taxe $11_1$ à $11_M$. Chaque détecteur $10_1$ à $10_M$ est adapté aux caractéristiques de transmission des impulsions de taxe attribuées au poste téléphonique public associé $P_1$ à $P_M$, selon que les impulsions de télétaxe sont détectées sur la paire de fils de taxe ou sur les fils de ligne à la fréquence de 12 kHz ou de 50 Hz. Un détecteur $10_m$, $m$ variant de 1 à $M$, comporte une bascule de Schmitt $101_m$ mettant sous forme logique les impulsions de taxe qui sont recues par un filtre passe-bande ou passe-bas adapté à la nature et à la fréquence des impulsions de taxe et qui sont transmises à l'entrée de comptage du compteur associé $11_m$.

On notera dès maintenant que, dans la Fig. 1 et les Figs. suivantes 2 à 4, on a représenté en détail la structure composante des blocs affectés à un poste téléphonique $P_m$, m variant de 1 à M, les autres blocs à fonctions analogues affectés aux autres postes étant identiques, sauf indication contraire. Il en sera de même en ce qui concerne les blocs affectés à un groupe de classement $G_n$, n variant de 1 à N, relativement aux autres groupes $G_1$ à $G_N$, comme il sera expliqué dans la suite.

L'appareil analyseur 1 comprend également une unité de traitement 12 des comptes de taxe $C_1$ à $C_M$ qui sont transmis par les sorties $110_1$ à $110_M$ des compteurs de taxe $11_1$ à $11_M$. Cette unité de traitement 12, objet de l'invention, est commandée par un programmateur 13 analogue à un microprocesseur, lui-même instruit par un clavier alphanumérique ou des roues codeuses et boutons-poussoirs 14 qui sont intégrés à l'appareil d'une manière analogue à un téléscripteur. Le programmateur 13 peut être instruit également par un terminal de surveillance distant et de gestion du trafic 3. Ce terminal 3 est relié à l'appareil 1 a' travers une voie téléphonique bidirectionnelle 4 spécialisée ou appartenant au réseau commuté et au moyen d'un transmetteur téléphonique du genre connu 5, ce dernier comportant un codeur-décodeur adapté au code de la voie 4.

L'unité de traitement 12 comprend essentiellement un circuit de répartition 15 des postes téléphoniques publics, un circuit d'initialisation 16 de l'analyse des comptes de taxe relativement à chaque groupe de classement $G_1$ à $G_N$, un circuit de transmission de données 17 et un circuit d'analyse de trafic 18 relatif à un compte de taxe.

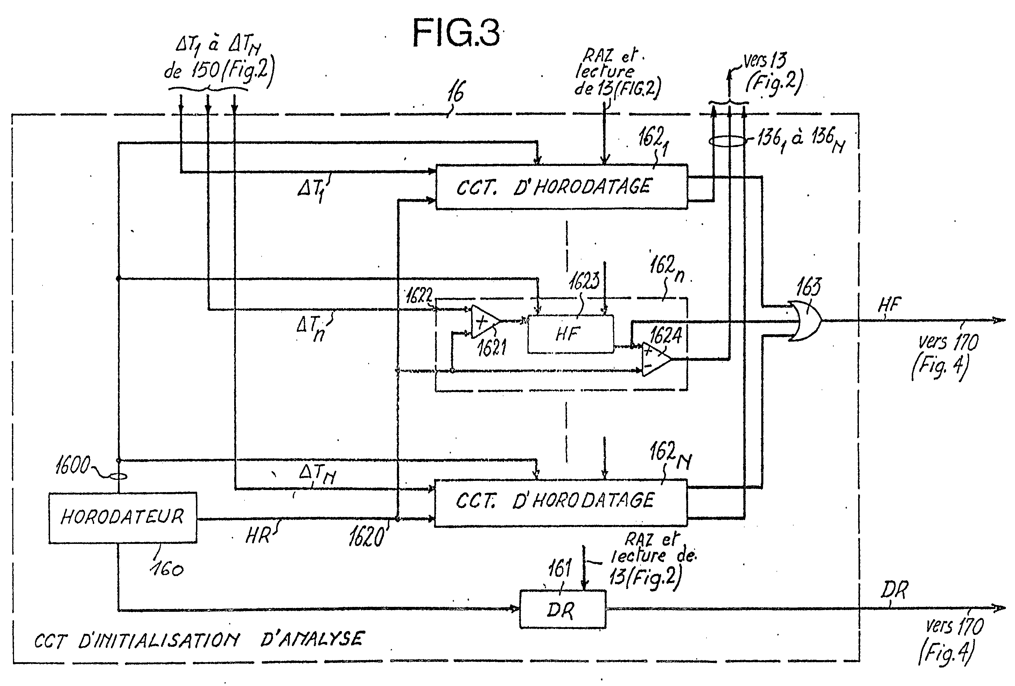

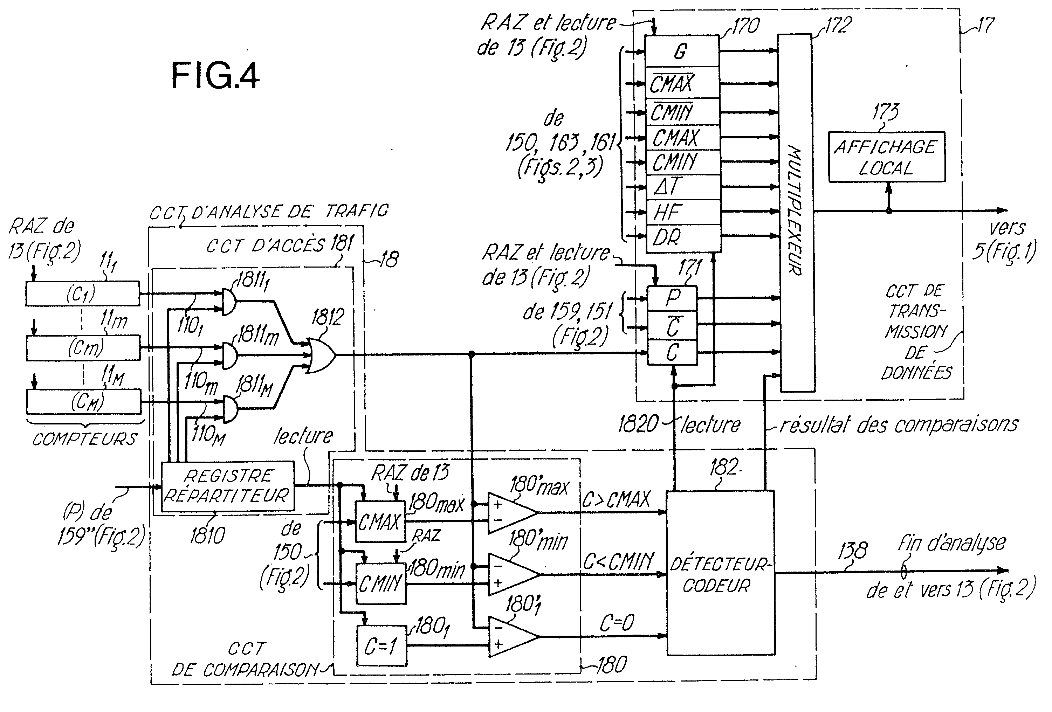

La Fig. 2 montre en détail le circuit de répartition des postes téléphoniques 15 qui permet de classer les postes téléphoniques $P_1$ à $P_M$. On a supposé que l'analyse de trafic est effectuée pour N groupes d'analyse $G_1$ à $G_N$, avec N<M. Chaque groupe d'analyse $G_n$, n variant de 1 à N, est défini par une plage d'intensité moyenne de trafic, prise relativement à 24 heures par exemple, $\overline{CMIN}_n$ à $\overline{CMAX}_n$, et par une période d'observation $\Delta T_n$. Les plages ($\overline{CMIN}_1$, $\overline{CMAX}_1$) à ($\overline{CMIN}_N$ à $\overline{CMAX}_N$) des groupes $G_1$ à $G_N$ ont évidemment des limites communes deux à deux afin de recouvrir toutes les intensités moyennes $\overline{C}_1$ à $\overline{C}_M$ des postes téléphoniques $P_1$ à $P_M$. Ces dernières intensités moyennes ont été établies lors d'une étude préalable du trafic des postes téléphoniques pendant une période d'observation relativement longue, telle qu'un mois par exemple.

Au début de la mise en service de l'appareil 1, on procède à l'affectation de chaque poste $P_1$ à $P_M$ dans un groupe $G_1$ à $G_N$ en fonction de la valeur $\overline{C}_1$ à $\overline{C}_M$, sur ordre du clavier 14 ou du terminal 3. Pour ce faire, le programmateur 13 écrit à travers le bus 130 les caractéristiques définissant chaque groupe $G_1$ à $G_N$ dans l'un d'au moins N blocs de cellules mémoires $150_1$ à $150_N$ d'une mémoire de groupes 150. Les caractéristiques relatives à un groupe $G_n$ sont l'adresse $G_n$ du groupe, les deux limites de comparaison d'intensité moyenne de trafic $\overline{CMIN}_n$ et $\overline{CMAX}_n$, la période de la durée d'observation $\Delta T_n$ et les deux limites de comparaison des comptes de taxe $\overline{CMIN}_n$ et $CMAX_n$ auxquelles seront comparées les comptes de taxe C comptabilisés pendant la période d'observation prédéterminée $\Delta T_n$ et associés aux postes affectés au groupe $G_n$. Chaque adresse $P_1$ à $P_M$ des postes téléphoniques est écrite par le programmeur 13 dans l'un d'au moins M blocs de cellules mémoires $151_1$ à $151_M$ d'une mémoire de postes 151, à travers le bus 131, ainsi que l'intensité moyenne de trafic $\overline{C}_1$ à $\overline{C}_M$ du poste.

Puis l'opérateur déclenche une phase de répartition des postes dans les groupes. Cette phase est composée de M séquences cycliques. Au début de la séquence de répartition d'un poste tel que $P_m$, le programmateur commande, à travers les bus 132 et 133, la lecture de l'adresse du premier groupe $G_1$ et de l'adresse $P_m$ du poste, qui sont transférées à travers deux portes OU 152' et 153' dans deux registres tampons 152 et 153 respectivement. Puis, le programmeur 13 lit l'intensité moyenne $\overline{C}_m$ associée au poste $P_m$ qui est transmise à travers une porte OU 154 aux entrées inverse (—) et directe (+) de deux comparateurs 155 et 156 et, simultanément, lit les limites d'intensité moyenne de trafic $\overline{CMIN}_1$ et $\overline{CMAX}_1$ du premier groupe $G_1$ qui sont transmises à travers deux portes OU 155' et 156' aux entrées directe (+) et inverse (—) des comparateurs 155 et 156. Si on a $\overline{CMIN}_1 \leqslant \overline{C}_m < \overline{CMAX}_1$, les sorties des circuits 155 et 156 sont à l'état "1". Ceci indique au programmateur 13, à travers une porte ET 157 et un fil 135, que le poste $P_m$ doit être classé dans le groupe $G_1$. Dans ce cas, le programmateur 13 commande, à travers le bus 134, la lecture de l'adresse du groupe $G_1$ qui est transmise du registre 152 à un registre répartiteur 158. Le registre 158 fait correspondre à chaque groupe $G_1$ à $G_N$ un bloc mémoire de liste de postes $159_1$ à $159_N$ d'une mémoire 159, lequel comporte au moins M cellules mémoires propres à enregistrer les adresse des postes ayant une valeur $\overline{C}$ comprise entre les limites d'intensité moyenne du groupe associé. Dans le cas présent, le registre de répartition 158 ouvre la porte ET $159'_1$, parmi les N portes ET $159'_1$ à $159'_N$ associées aux blocs $159_1$ à $159_N$, afin que soit transférée l'adresse du poste $P_m$ contenu dans le registre 153 dans une cellule mémoire vide du block $159_1$. Si on a $\overline{C}_m \geqslant \overline{CMAX}_1$ ou $C_m < \overline{CMIN}_1$, le programmateur 13 ordonne la comparaison de $\overline{C}_m$ avec les valeurs d'intensités moyennes associées aux groupes suivants $G_2$ à $G_N$ selon la sous-séquence précédente jusqu'à ce que les circuits de comparaison 155 et 156 aient détecté une plage d'intensités moyennes à laquelle appartient la valeur $\overline{C}_m$.

Puis, d'une manière analogue à la séquence précédente, tous les autres postes téléphoniques sont répartis dans les groupes. A la fin de la phase de répartition, chaque bloc mémoire $159_1$ à $159_N$ contient un nombre déterminé d'adresses de postes qui est généralement différent de ceux contenus dans les autres. Ainsi, lors de l'analyse de trafic proprement dite, chaque poste téléphonique $P_1$ à $P_M$ est analysé en fonction de son intensité de trafic moyenne $\overline{C}_1$ à $\overline{C}_M$ par la comparaison des valeurs limites $\overline{CMIN}$ et $\overline{CMAX}$ du groupe auquel il appartient, avec son compte de taxe $C_1$ à $C_M$ évalué après chaque période d'observation $\Delta T$ du groupe. Après chaque période d'observation $\Delta T$ d'une même groupe, les postes téléphoniques de ce groupe sont analysés successivement.

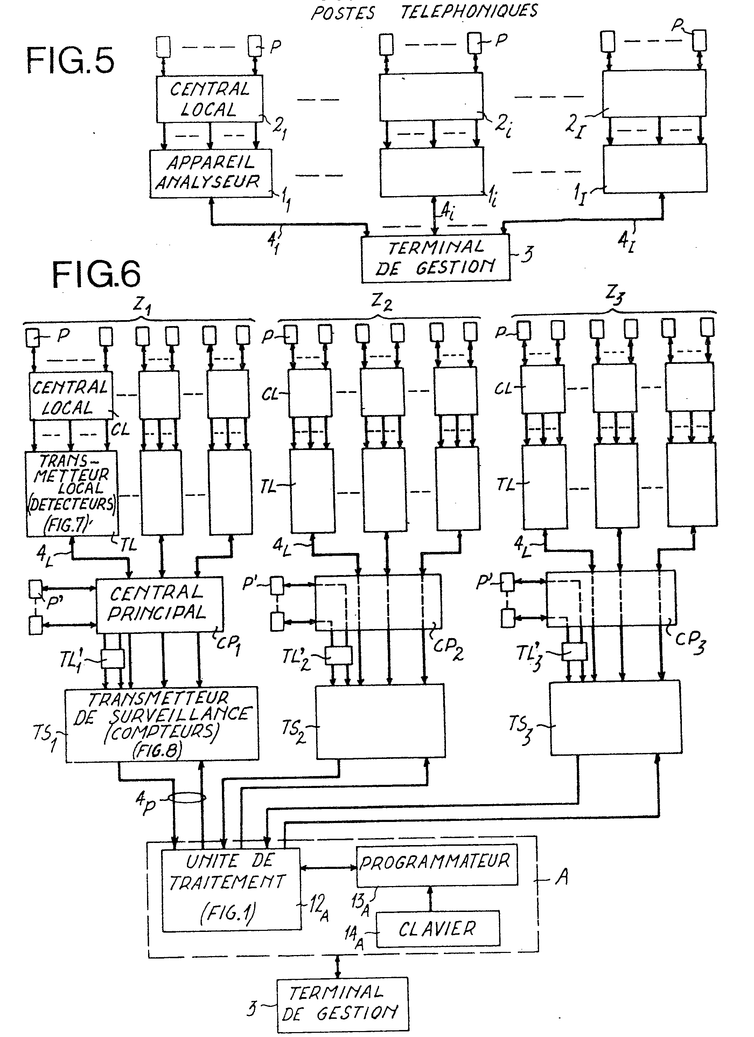

Le circuit 16, montré en détail à la Fig. 3, initialise les analyses des comptes de taxe $C_1$ à $C_M$ enregistrés dans les compteurs $11_1$ à $11_M$. Ce circuit 16 comporte un horodateur 160, un registre de date 161 qui reçoit de l'horodateur la date relative DR (mois et quantième) et N circuits d'horodatage $162_1$ à $162_N$ qui reçoivent à leurs entrées communes 1620 l'heure relative HR transmise par l'horodateur. Tous les circuits d'horodatage étant identiques, un seul, tel que celui $162_n$ associé au groupe $G_n$, est montré en détail à la Fig. 3.

Un circuit d'horodatage 162 comprend un circuit d'addition 1621 ayant une entrée 1620 recevant l'heure relative HR transmise par l'horodateur et une autre entrée 1622 recevant la durée d'observation $\Delta T$ qui est transmise par la cellule de bloc mémoire 150 associé au groupe sur ordre de lecture du programmeur 13, lors de sa mise en phase d'analyse du trafic ou après la fin de l'analyse des postes affectés au groupe considéré. Le résultat de l'addition HR + $\Delta T$ égal à l'heure de la fin de la période d'observation HF est mémorisé dans un registre 1623. Au cours de la période d'observation, l'horloge de l'horodateur 160 ordonne périodiquement la lecture du registre 1622, par exemple toutes les minutes, à travers le fil 1600. L'heure relative HR est transmise par l'horodateur 160 à l'entrée inverse (−) d'un comparateur 1624 et est périodiquement comparée à l'heure finale HF transmise à l'entrée directe (+) du comparateur 1624 par la sortie du registre 1623. Lorsque HF = HR, le comparateur 1624 transmet un signal de fin de la période d'observation sur le fil de sortie associé $136_1$ à $136_N$ vers le programmeur 13 afin d'initialiser l'analyse des comptes de taxe des postes affectés au groupe considéré. Si deux ou plusieurs groupes doivent être analysés à une même heure de fin de période d'observation, le programmeur 13 établit une priorité prédéterminée d'analyse relative à ces groupes.

Le programmateur 13, ayant reçu un signal d'initialisation sur l'un des fils $136_1$ à $136_N$, par exemple le fil $136_n$, passe en phase d'analyse du groupe $G_n$. Il commande, via le bus 130, le transfert de l'adresse $G_n$ à travers la porte OU 152' et d'une ou plusieurs caractéristiques telles que $\overline{CMIN}_n$, $\overline{CMAX}_n$, $CMIN_n$, $CMAX_n$ et $\Delta T_n$ définissant le groupe $G_n$, à travers les portes OU 155', 156' et d'autres non représentées, vers une mémoire tampon 170 du circuit de transmission de données 17, montré à la Fig. 4, en vue de leur impression et/ou de leur visualisation ultérieure. Simultanément, le programmateur 13 commande le transfert de l'heure finale HF et de la date DR à partir des registres 1623 et 161 dans la mémoire 170 et le transfert des limites de comparaison des comptes de taxe $CMAX_n$ et $CMIN_n$ à partir du bloc mémoire $150_n$ vers deux mémoires tampons $180_{max}$, $180_{min}$ du circuit d'analyse de trafic 18.

Tel qu'illustré à la Fig. 4, le circuit d'analyse de trafic 18 comprend essentiellement un circuit de comparaison 180, un circuit d'accès 181 et un détecteur-codeur 182. Le circuit d'analyse 18 est utilisé chaque fois qu'un compte de taxe C d'un poste est à analyser. Lors de la phase d'analyse relative aux postes affectés au groupe $G_n$, par exemple, des séquences d'analyse identiques, en nombre égal à celui des adresses de poste mémorisées dans le bloc de mémoire de liste $159_n$, sont commandées successivement par le programmateur 13. Chaque séquence d'analyse d'un poste du groupe $G_n$ est initialisée par la lecture de son adresse dans le bloc $159_n$, via le bus $137_n$. Cette adresse de poste est transmise, à travers la porte OU 159'', montrée à la Fig. 1, vers l'un des trois registres d'une mémoire tampon 171 du circuit de transmission de données 17 et vers un registre répartiteur 1810 du circuit d'accès 181. Elle peut être également transmise au programmateur 13 afin qu'il commande le transfert de la valeur $\overline{C}$ du poste considéré du bloc mémoire 151 associé dans l'un des registres de la mémoire tampon 171.

Dans le circuit d'accès 181, chaque foise que le registre 1810 reçoit une adresse de poste téléphonique, il ouvre une porte ET correspondante $1811_1$ à $1811_M$ dont l'autre entrée est reliée à la sortie $110_1$ à $110_M$ du compteur $11_1$ à $11_M$ du poste adressé. A travers la porte ET 1811 correspondante et une porte OU 1812, le compte C est enregistré dans le troisième registre de la mémoire tampon 171 et est transmis également à l'entrée directe (+) d'un comparateur $180'_{max}$, à l'entrée inverse (−) d'un comparateur $180'_{min}$ et à l'entrée inverse (−) d'un comparateur $180'_1$. Les autres entrées des comparateurs $180'_{min}$, $180'_{max}$ et $180_1$ du circuit de comparaison 180 sont reliées respectivement aux sorties des mémoires tampons $180_{max}$, $180_{min}$ et d'une mémoire morte $180_1$ ayant mémorisé la valeur de compte de taxe C=1. Ainsi, chaque fois que le registre 1810 reçoit une adresse de poste, iul ordonne la lecture des mémoires $180_{max}$, $180_{min}$ et $180_1$. Par suite, le compte de taxe C du poste adressé, égal au nombre d'impulsions de télétaxe transmises vers le poste considéré pendant la période d'observation $\Delta T$ précédemment écoulée, est comparé aux trois valeurs $CMAX_n$, $CMIN_n$ et $C=1$, afin de signaler éventuellement le "mauvais fonctionnement" du poste téléphonique public. Cette information est relative à un signal de trafic élevé anormal transmis par le comparateur $180'_{max}$ lorsque $C>CMAX_n$, à un signal de trafic faible anormal transmis par le comparateur $180'_{min}$ lorsque $C>CMIN_n$ et à un signal de trafic nul transmis par le comparateur $180'_1$ lorsque $C<1$. Dans le cas d'une transmission du signal $C=0$, celle-ci indique que l'établissement d'une communication du poste téléphonique public avec le central de rattachement 2 est impossible et que le poste a été hors service pendant la période $\Delta T$.

L'un de ces trois signaux d'indication de "mauvais fonctionnement" est signalé par l'état "1" sur la sortie du comparateur. Les trois entrées du détecteur-codeur 182 sont reliées respectivement aux sorties des trois comparateurs $180'_{max}$, $180'_{min}$, $180'_1$. Lorsque le détecteur-codeur 182 détecte un "1", il transmet sur le bus 1820 des signaux de lecture qui commandent la transmission des mots d'adresse caractéristiques $G_n$, $\overline{CMAX_n}$, $\overline{CMIN_n}$, $CMAX_n$, $CMIN_n$, $\Delta T_n$, HF, DR du groupe $G_n$ mémorisés dans la mémoire 170 et des mots d'adresse et de caractéristiques (P, C, $\overline{C}$) du poste précédemment analysé et en fonctionnement anormal, mémorisés dans la mémoire 171. Le détecteur-codeur 182 transmet un mot de codage correspondant à l'une des trois indications de mauvais fonctionnement qui est multiplexée dans un multiplexeur 172 avec les mots de données précédemment transmis par les mémoires 170 et 171. Tous ces mots de données convenablement codés et multiplexés sont transmis par la sortie du multiplexeur 171 vers un dispositif d'affichage 173 en vue de leur enregistrement local et/ou, à distance, vers le terminal 3 à travers le transmetteur 5 et la voie téléphonique 4. Selon une autre variante, le détecteur-codeur 182 peut également transmettre un signal "rien à signaler" lorsqu'aucun "1" n'est détecté à la sortie des comparateurs $180'_{max}$, $180'_{min}$, $180'_1$, auquel cas la lecture des mémoires 170 et 171 est directement commandée par le programmateur 13 après réception d'un signal sur le fil 138.

Le détecteur-codeur 182 transmet également au programmateur 13 sur le fil 138 un signal de fin de séquence d'analyse relative au poste précédemment analysé du groupe $G_n$. Ceci provoque la remise à zéro (RAZ) du compteur 11 du poste et de la mémoire de caractéristiques de poste 171 par le programmateur 13. Une nouvelle séquence d'analyse relative à l'adresse du poste suivante mémorisée dans le bloc mémoire de liste de poste $159_n$ associé au groupe $G_n$ est analysée selon le processus précédent, et ainsi de suite. A la fin de l'analyse du dernier poste du groupe $G_n$, le programmateur 13 remet à zéro (RAZ) le registre 1623 d'heure finale HF du circuit d'horodatage $162_n$, les mémoires tampons 170, 171, $180_{max}$ et $180_{min}$ afin d'initialiser une nouvelle période d'observation de durée $\Delta T_n$ des comptes de taxe des postes téléphoniques affectés au groupe considéré $G_n$. On remarquera que la durée d'analyse relative à un groupe G est toujours inférieure à la période entre deux impulsions de taxe successives reçues par un compteur de taxe 11.

On notera également que toutes les mémoires de l'appareil analyseur 1, à l'exception de la mémoire $180_1$, sont des mémoires vives, c'est-à-dire commandées aussi bien en écriture qu'en lecture par le programmateur 13 sur instruction de clavier 14 ou du terminal 3 afin de modifier certains paramètres. Une telle modification peut être, par exemple, celle des valeurs d'intensité moyenne $\overline{C}$ de certains postes en fonction de leurs évolutions de trafic. Par suite, une nouvelle phase de classement de ces postes relativement aux limites d'intensité de trafic moyennes $(\overline{CMIN_1}, \overline{CMAX_1})$ à $(\overline{CMIN_N}, \overline{CMAX_N})$ des groupes est effectuée après avoir vidé les cellules de la mémoire de liste 159 contenant les adresses de ces postes. Par le programmateur 13 peut être instruit à tout instant pour transmette en temps réel le compte de taxe C de l'un ou de plusieurs compteurs de taxe 11 après comparaison avec les limites de comparaison des comptes de taxe, des groupes d'affectation respectifs afin de connaître l'état réel d'un ou de plusieurs postes téléphoniques publics. Pour ce faire, une telle séquence d'analyse directe est commandée directement par le programmateur à partir de la mémoire 159.

A titre d'exemple non limitatif, un appareil analyseur de trafic selon cette première réalisation surveille 48 postes téléphoniques publics rattachés à un central commun 2 et répartis, selon leurs valeurs d'intensité moyenne $\overline{C}$ relatives à une journée de 24 heures, en cinq groupes d'analyse $G_1$ à $G_5$ définis par le tableau suivant:

| Numéro Groupe | Limites d'intensité de trafic moyenne $\overline{CMIN} \leqslant \overline{C} < \overline{CMAX}$ (Nb de taxes / jour) | Limites de comparaison des comptes de taxe C pour $\Delta T$ donnée | | Période d'observation $\Delta T$ (heures) |
|---|---|---|---|---|
| | | CMIN (trafic faible) | CMAX (trafic élevé) | |
| 1 | $200 \leqslant \overline{C} < 300$ | C < 80 | C > 900 | 24 |
| 2 | $100 \leqslant \overline{C} < 200$ | C < 30 | C > 600 | 24 |
| 3 | $70 \leqslant \overline{C} < 100$ | C < 40 | C > 800 | 48 |
| 4 | $35 \leqslant \overline{C} < 70$ | C < 15 | C > 650 | 48 |
| 5 | $0 \leqslant \overline{C} < 35$ | C < 5 | C > 400 | 72 |

Comme déjà dit selon cette première réalisation, l'appareil analyseur 1 permet d'analyser les comptes de taxe relatifs à des postes téléphoniques publics P desservis par un central téléphonique commun 2. Le terminal de gestion 3, tel qu'un ordinateur, est relié à des supuports d'enregistrement convenables destinés à l'établissement de fichiers présentant l'histogramme des postes au cours d'une grande période d'observation. Dans l'installation de télésurveillance de trafic montré à la Fig. 5, le terminal 3 est localisé dans un centre commun de gestion d'une pluralité de postes téléphoniques P qui sont répartis en groupes locaux. Chaque groupe est rattaché à un central local $2_1$ à $2_1$ et est surveillé et analysé par un appareil analyseur de trafic local $1_1$ à $1_1$. Chaque appareil analyseur $1_1$ à $1_1$ est relié au terminal 3 par une voie téléphonique bidirectionnelle $4_1$ à $4_1$, spécialisée ou appartenant au réseau commuté. Cette première organisation d'une installation de télésurveillance de trafic selon l'invention est destinée de préférence à des postes téléphoniques publics d'une zone urbaine et interurbaine dans laquelle un nombre relativement élevé de poste téléphoniques constituant un groupe local est desservi par un même central téléphonique 2.

Eventuellement, le dispositif d'affichage local 173 d'un appareil analyseur 1, montré à la Fig. 4, et de préférence un dispositif d'affichage central commandé par le terminal 3 comprennent chacun un tableau de visualisation tel qu'une carte indiquant à l'opérateur, au lieu géographique correspondant, l'état de fonctionement des postes téléphoniques publics de la zone locale ou de l'ensemble de la zone urbaine et interurbaine. Par exemple, trois voyants lumineux du genre diodes électroluminescentes sont disposés au lieu géographique de chaque poste téléphonique sur le tableau. Chacun de ces trois voyants indique par son illumination l'un des trois caractères respectifs de "fonctionnement anormal" défini par le circuit de comparaison 180. Cette visualisation globale permet, en outre, de localiser les zones d'activité respectives des fraudeurs. Les résultats des comparaisons sont ainsi interprétés par l'équipe de maintenance et de surveillance en fonction des observations précédentes et des analyses de trafic antérieures effectuées, par exemple au moyen d'un calculateur rattaché au terminal 3, en dépendance des paramètres $\Delta T$, CMAX et CMIN des groupes d'affectation des postes. Bien entendu, les résultats des comparaisons peuvent être également visualisés sous forme alphanumérique par l'intermédiaire d'une imprimante ou d'une console de visualisation incluse dans le dispositif 173 ou le terminal 3.

Selon une seconde réalisation, l'installation de télésurveillance a une organisation telle que montrée schématiquement à la Fig. 6. Cette seconde réalisation correspond au cas où la pluralité de postes téléphoniques publics est répartie dans des zones rurales pour lesquelles seulement quelques postes publics, inférieurs à la dizaine, sont desservis par un même central de rattachement local CL. Dans ce cas, afin de limiter le coût de la télésurveillance d'une pluralité de tels groupes locaux, les comptes de taxe ne sont pas analysés et comptabilisés localement.

Selon l'exemple montré à la Fig. 6, on a supposé que l'ensemble des postes P étaient répartis dans trois zones rurales distantes $Z_1$, $Z_2$ et $Z_3$. Chaque zone est desservie par une pluralité de premiers centraux téléphoniques dits locaux distants CL à chacun desquels est relié un petit nombre de postes téléphoniques publics P. Un premièr transmetteur dit local TL concentre la surveillance des postes desservis par un même central local CL et transmet en temps réel les impulsions de taxe multiplexées sur une même voie téléphonique $4_L$ à un second transmetteur dit de surveillance $TS_1$ à $TS_3$ à travers un second central téléphonique dit principal distant $CP_1$ à $CP_3$ formant le noeud de la zone associée $Z_1$ à $Z_3$. D'autres postes téléphoniques publics tels que P' peuvent être desservis directement par le central principal $CP_1$ à $CP_3$ et être reliés à un transmetteur local $TL'_1$ à $TL'_3$. Chaque transmetteur de surveillance TS comptabilise les impulsions de taxe relatives à chaque poste téléphonique public P desservi par un central local CL de la zone Z ainsi que les impulsions de taxe des postes P' desservis directement par le central principal CP de la zone Z. L'analyse des comptes de taxe de tous les postes répartis dans les zones $Z_1$ à $Z_3$ est effectuée par un appareil analyseur de trafic central A, localisé au noeud de l'ensemble des zones $Z_1$ à $Z_3$ et pouvant être très éloigné des centraux principaux $CP_1$ à $CP_3$. Cet analyseur de trafic A est relié à un terminal de gestion 3. Les liaisons téléphoniques $4_L$ entre les transmetteurs locaux TL et les centraux principaux $CP_1$ à $CP_3$, d'une part, et $4_P$ entre les transmetteurs de surveillance $TS_1$ à $TS_3$ et l'analyseur de trafic central A, d'autre part, peuvent être réalisées par des lignes téléphoniques spécialisées qui sont propres uniquement à de telles communications, ou par des lignes téléphoniques du réseau commuté, auquel cas, au moins les transmetteurs de surveillance et l'appareil analyseur A, comportént chacun un dispositif de transmission et de réception d'appel automatique.

Il apparaît ainsi que l'installation de télésurveillance de trafic montré à la Fig. 6 a les mêmes fonctions que celles d'un appareil d'analyse de trafic 1 selon la première réalisation et que ces fonctions sont telles que, la détection des impulsions de taxe est réalisée dans les transmetteurs locaux TL, TL', le comptage des impulsions de taxe est réalisé dans les transmetteurs de surveillance TS et l'analyse proprement dite du trafic relative aux comptes de taxe est effectuée par l'appareil analyseur central A.

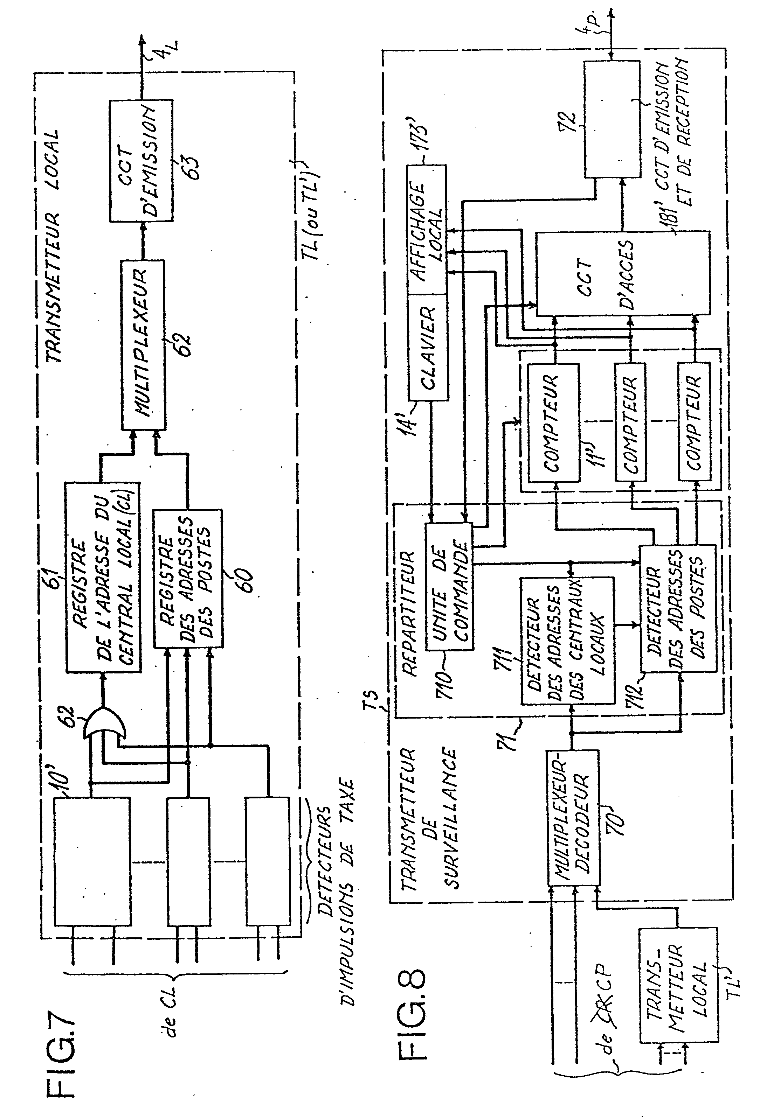

La Fig. 7 représente schématiquement la structure et l'organisation d'un transmetteur local TL ou TL'. On y retrouve, reliés aux paires de fils de taxe du central local CL et, d'une manière analogue à la Fig. 1, des détecteurs d'impulsions de taxe 10' qui sont associés chacun à un poste téléphonique public P desservi par le central local CL. Un registre d'adresses des postes locaux 60 a ses entrées respectivement reliées aux sorties des détecteurs 10' tandis qu'un registre de l'adresse du central local 61 a son entrée reliée aux sorties des détecteurs 10' à travers une porte OU 62. Chaque fois qu'une impulsion de taxe est détectée par un détecteur 10', le registre 60 transmet sur sa sortie l'adresse du poste téléphonique associé au détecteur et le registre 61 transmet sur sa sortie l'adresse du central local CL. Un multiplexeur 62 multiplexe les deux adresses pour les transmettre à un circuit d'émission 63 qui est relié à travers la ligne téléphonique locale $4_L$ au central principal correspondant CP. Le circuit d'émission 63 code les adresses multiplexées selon le code de ligne utilisé.

Toutes les paires d'adresses transmises par les transmetteurs locaux TL et également par le transmetteur TL' rattaché aux aux postes téléphoniques P' directement par le central principal CP sont décodées et multiplexées dans un multiplexeur-décodeur 70 du transmetteur de surveillance TS, comme montré à la Fig. 8. Les adresses multiplexées sont transmises à un répartiteur 71 qui comprend essentiellement une unité de commande 710, un détecteur d'adresse de central local 711 et un détecteur d'adresse de poste téléphonique 712. Les sorties du détecteur 712 sont reliées aux entrées de comptage d'une pluralité de compteurs de taxe 11', analogues à ceux montrés à la Fig. 1, qui sont chacun propre à comptabiliser les impulsions de taxe d'un poste téléphonique de la zone de rattachement commune Z desservie par le central principal CP. Le détecteur 711 comprend un registre d'adresses des centraux locaux CL et le détecteur 712 comprend des registres d'adresses des postes téléphoniques attribués chacun à un central local CL à l'exception d'un seul qui est attribué aux adresses des postes P' desservis directement par le central principal CP. Chaque fois que le détecteur 711 détecte l'adresse d'un central local CL ou du central principal CP, il transmet vers le détecteur 712 un signal d'adresse au registre d'adresse de poste associé au central, ce dernier transmettant ensuite une impulsion au compteur de taxe correspondant à l'adresse de poste détectée par le détecteur 712.

Les sorties des compteurs de taxe 11' du transmetteur de surveillance TS sont reliées à un circuit d'accès 181' jouant un rôle analogue au circuit d'accès 181 montré à la Fig. 4. Le registre répartiteur du circuit d'accès 181' permet de sélectionner les comptes de taxe des compteurs à analyser lorsqu'il reçoit une adresse de poste transmise à travers l'unité de commande 710 par l'appareil analyseur central A. La sortie du circuit d'accès 181' transmet ainsi, sur ordre de l'appareil analyseur A, les comptes de taxe vers un circuit d'émission et de réception 72 relié à l'appareil analyseur A à travers la voie téléphonique bidirectionnalle $4_P$. Ce circuit 72 comprend un modulateur-démodulateur (modem) et peut comporter un dispositif d'émission et de réception d'appel automatique.

Chaque transmetteur de surveillance TS peut également comporter un clavier 14' pour instruire localement l'unité de commande 710 et un dispositif d'affichage 173' relié aux sorties des compteurs de taxe 11' pour afficher localement et surveiller en temps réel les comptes de taxe de postes de la zone Z.

L'appareil analyseur central A comporte, d'une manière analogue à celui 1 décrit selon la première réalisation, une unité de traitement des comptes de taxe $12_A$, un programmateur $13_A$ et un clavier $14_A$, comme montré à la Fig. 6.

L'unité de traitement $12_A$ peut comporter, du côté des jonctions de son circuit d'accès avec les lignes de transmission $4_P$, un dispositif d'émission et de réception d'appel automatique, de préférence lorsque les lignes $4_P$ appartiennent au réseau commuté public.

Chaque cellule de la mémoire de liste de groupe, telle que 159 montrée à la Fig. 2, qui est contenue dans l'unité $12_A$, mémorise, outre l'adresse d'un poste, les adresses du central principal CP et du central local CL associés à ce poste. Lorsque ce poste doit être analysé, le registre répartiteur, tel que 1810 montré à la Fig. 4 et inclus dans le circuit d'accès de l'unité $12_A$ dont les entrées sont reliées aux lignes téléphoniques bidirectionnelles $4_P$, émet vers l'unité de commande 710 du transmetteur de surveillance correspondant TS ces trois dernières adresses. Ce transmetteur, après détection de son adresse dans le circuit d'émission et de réception 72, commande, à travers l'unité de commande 710, l'ouverture de l'accès de compteur de taxe alloué au poste considéré. Le remise à zéro (RAZ) de chaque compteur selon cette seconde réalisation et d'autres fonctions annexes sont commandées à distance par l'appareil analyseur central A.

La transmission des données, aussi bien entre le terminal de gestion 3 et les appareils analyseurs de trafic $2_1$ à $2_I$ selon la première réalisation montrée à la Fig. 5, qu'entre l'appareil analyseur central A et les transmetteurs de surveillance $TS_1$ à $TS_3$ peut être réalisée par des liaisons point-à-point ou par des liaisons multipoints à travers le réseau commuté.

Bien que l'invention ait été décrite selon des exemples préférés d'organisation d'un appareil ou d'un installation de télésurveillance de trafic, d'autres réalisations au moins en ce qui concerne la structure de l'unité de traitement des comptes de taxes peuvent être facilement imaginables par l'homme de l'art dans le cadre des revendications annexées, pour autant qu'elles permettent une analyse de trafic par comparaison à des plages d'intensité de trafic prédéterminées. Enfin, on notera que, au lieu de répartir les postes téléphoniques en groupes tels que $G_1$ à $G_N$, en vue de leurs analyses de trafic, l'appareil analyseur peut comporter selon d'autres variantes des circuits d'horodatage initialisant respectivement et séparément les analyses des comptes de taxe. Dans ce cas, la plupart des composants contenus dans le circuit de répartition 15, tels que notamment les comparateurs 155 et 156 et la mémoire de listes de postes 159 montrés à la Fig. 2, sont supprimés.

## Revendications

1. Appareil analyseur de trafic de postes téléphoniques publics comprenant, associés à chaque poste (P), des moyens (10) pour détecter les impulsions de taxe transmises sur les fils de taxe (E) alloués au poste au niveau de son central de rattachement (2) et des moyens (11) pour compter les impulsions de taxe détectées, caractérisé en ce qu'il comprend des moyens (15) pour mémoriser les adresses des postes, des limites de comparaison (CMAX, CMIN) aux comptes de taxes (C) des postes et les durées ($\Delta T$) de périodes d'observation des postes téléphoniques (P), des moyens d'horodatage (16) pour détecter périodiquement la fin (HF) de chacune des périodes d'observation de chaque poste, des moyens d'analyse des comptes de taxe (18) reliés sélectivement aux sorties (110) des moyens de comptage (11) sous la commande des moyens d'horodatage (16) pour comparer chaque compte de taxe (C) comptabilisé dans les moyens de comptage d'un poste au moins à deux limites de compte (CMAX, CMIN) specifiques audit poste à la fin d'une période d'observation dudit poste et des moyens de codage (182) reliés aux moyens de comparaison pour produire un signal codé indiquant le type de fonctionnement anormal de poste lorsque son compte de taxe (C) est supérieur à l'une (CMAX) ou inférieur à l'autre (CMIN) des limites de compte spécifiques audit poste.

2. Appareil analyseur de trafic conforme à la revendication 1, caractérisé en ce que les moyens d'analyse (18) comparent chaque compte de taxe (C) analysé également à l'unité afin que lesdits moyens de codage (182) produisent un signal codé indiquant que le poste associé est hors service, lorsque le compte de taxe est nul.

3. Appareil analyseur de trafic conforme à la revendication 1 ou 2, caractérisé en ce que les moyens de codage (182) produisent un signal codé indiquant que le post analysé a un fonctionnement normal lorsque son compte de taxe (C) est compris entre les limites de compte (CMAX, CMIN).

4. Appareil analyseur de trafic conforme à l'une des revendications 1 à 3, caractérisé en ce qu'il comprend des moyens (15) pour répartir et analyser les postes téléphoniques (P) par groupes d'analyse (G) en dépendance de leurs intensités de trafic moyennes ($\overline{C}$), lesdits moyens de répartition comprenant des moyens (151) pour mémoriser les intensités de trafic moyennes ($\overline{C}$) des postes, des moyens (150) pour mémoriser, relativement à chaque groupe (G), son adresse conjointement à ses limites de comparaison ($\overline{CMAX}$, $\overline{CMIN}$) aux intensités de trafic moyennes ($\overline{C}$) de tous les postes, ses limites de comparaison (CMAX, CMIN) aux comptes de taxes des postes affectés audit groupe et sa durée d'observation (ΔT) commune aux postes affectés audit groupe, des moyens (155, 156) pour comparer successivement l'intensité de trafic moyenne (C̄) de chaque poste aux limites d'intensité de trafic moyenne (C̄MAX, C̄MIN) de tous les groupes, et des moyens (159) associés à chaque groupe, pour mémoriser, sous la commande des moyens de comparaison (155, 156), la liste des addresses des postes ayant leurs intensités de trafic moyennes comprises entre les limites d'intensité de trafic moyenne (C̄MAX, C̄MIN) dudit groupe, et en ce que lesdits moyens d'horodatage (16) commandent, en répose à la détection périodique de la fin (HF) de la période d'observation commune des postes affectés à un groupe, les lectures successive des adresses des postes dans les moyens de mémorisation de liste (159) associés audit groupe afin de relier successivement les sorties (110) des moyens de comptage (11) des postes adressés selon ladite liste de groupe aux entrées des moyens d'analyse (18) dans lesquels tous les comptes de taxe (C) relatifs aux postes dudit groupe sont comparés au moins aux limites de compte (CMAX, CMIN) dudit groupe.

5. Appareil analyseur de trafic conforme à la revendication 4, caractérisé en ce qu'il comprend des moyens (13, 14), pour changer l'affectation d'un poste relativement aux listes d'adresses associées aux groupes en répose à la modification de son intensité de trafic moyenne (C̄) faisant suite à une évolution de son trafic.

6. Appareil analyseur de trafic conforme à l'une des revendications 1 à 5, caractérisé en ce qu'il comprend des moyens (171, 173, 5) pour transmettre au moins l'adresse du poste, le compte de taxe analysé et ledit signal codé caractérisant l'état de fonctionnement du poste à des moyens d'enregistrement locaux (173) ou distants (3), en répose au signal codé transmis par les moyens de codage (182).

7. Appareil analyseur de trafic conforme aux revendications 4 et 6, caractérisé en ce que lesdits moyens de transmission (170, 5) transmettent également l'adresse du groupe (G) auquel appartient ledit poste et/ou l'une des données caractéristiques (C̄MAX, C̄MIN, CMAX, CMIN, ΔT) dudit groupe, et/ou l'heure et la date de la fin de la période d'observation dudit poste, en réponse audit signal codé.

8. Appareil analyseur de trafic conforme à l'une des revendications 1 à 7, caractérisé en ce qu'il comprend des moyens (173) pour visualiser les résultats des comparaisons relatives à chaque compte de taxe, soit sous forme alphanumérique, soit sous forme de voyants lumineux disposés sur une carte reproduisant la répartition géographique desdits postes téléphoniques.

9. Installation de télésurveillance pour analyser le trafic de postes téléphoniques publics (P) desservis par une pluralité de centraux téléphoniques (2), caractérisée en ce qu'elle comprend, associé à chaque central (2), un appareil analyseur de trafic (1) conforme à l'une des revendications 1 à 8 pour analyser les comptes de taxe des postes (P) desservis par le central, ainsi qu'un terminal (3) recevant des appareils analyseurs de trafic (1), à travers des voies téléphoniques bidirectionnelles (4), au moins le résultat des comparaisons de chaque compte de taxe (C) aux limites de compte (CMAX, CMIN) spécifiques auxdits postes.

10. Installation de télésurveillance conforme à la revendication 9, caractérisée en ce que ledit terminal (3) comprend des moyens pour commander, à travers les voies téléphoniques (4), lesdits moyens d'affectation (15) des appareils analyseurs de trafic (1) en vue de modifier l'affectation des postes relativement aux groupes (G) et au moins les moyens de comptage (11) en vue de transmettre en temps réel au terminal (3) les comptes de taxe (C).

11. Utilisation de l'appareil analyseur de trafic conforme à l'une des revendications 1 à 8 dans une installation de télésurveillance pour analyser le trafic des postes téléphoniques publics desservis par une pluralité de premiers centraux téléphoniques (CL), ceux-ci étant desservis par des seconds centraux téléphoniques (CP), caractérisée en ce que lesdits moyens (10') pour détecter les impulsions de taxe des postes (P, P') sont rattachés à un premier, resp. second central (CL) et sont inclus dans des premiers moyens (TL, TL') pour transmettre à travers une première voie téléphonique ($4_L$) l'adresse dudit premier, resp. second central (CL, CP) et l'adresse de l'un desdits postes (P, Z; P'), en réponse à la détection d'une impulsion de taxe allouée audit poste, en ce que lesdits moyens (11') pour compter des impulsions de taxe allouée aux postes (P, Z; P') desservis par les premiers centraux desservis par un second central, resp. par un second central (CP), sont inclus dans des seconds moyens (TS) reliés au second central (CP) pour commander l'incrémentation des moyens de comptage (11') associés à chaque poste en réponse à la détection de l'adresse dudit poste (P, P') et de l'adresse du premier, resp. second central (CL, CP) desservant ledit poste, et en ce que les moyens d'analyse (18, $12_A$) de l'appareil analyseur (A) reçoivent successivement les comptes de taxe (C) à partir des moyens de comptage (11') sous la commande des moyens d'horodatage (16, $12_A$) à travers des secondes voies téléphoniques bidirectionnelles ($4_P$).

## Claims

1. Traffic analysing apparatus for public telephone sets comprising, assigned to each set (P), means (10) for detecting charge pulses transmitted over charge wires (E) assigned to the set by the telephone exchange (2) to which it is connected and means (11) for counting the detected charge pulses, characterized in that it comprises means (15) for storing the addresses of the telephone sets, comparison limits (CMAX, CMIN) for telephone set charge pulse counts and the times ($\Delta T$) of observation periods of the telephone sets (P), time recording means (16) for periodic detecting the end (HF) of each of the observation periods of each set, charge pulse count analysing means (18) connected selectively to the outputs (110) of the counting means (11) under the control of the time recording means (16) for comparing each charge pulse count (C) counted by the counting means of a telephone set to at least two count limits (CMAX, CMIN) specific to said telephone set at the end of the observation period of said set and coding means (182) connected to the comparing means for producing a coded signal indicating the abnormal operation type of the set when the charge pulse count (C) is greater than one (CMAX) or less than the other (CMIN) of the count limits specific to said set.

2. Traffic analysing apparatus as claimed in claim 1, characterised in that the analysing means (18) also compare each analysed charge count (C) with unity so that said coding means (182) produce a coded signal indicating that the assigned telephone set is out of service when the charge pulse count is equal to zero.

3. Traffic analysing apparatus as claimed in claim 1 or 2, characterized in that the coding means (182) produce a coded signal indicating that the analysed set is operating normally when its charge pulse count (C) lies between the count limits (CMAX, CMIN).

4. Traffic analysing apparatus as claimed in any one of claims 1 to 3, characterized in that it comprises means (15) for distributing and analysing the telephone sets (P) by classification groups (G) depending on their average traffic intensities ($\overline{C}$), said distributing means comprising means (151) for storing average traffic intensities ($\overline{C}$) of sets, means (150) for storing the address of each group (G) at the same time as its comparison limits ($\overline{CMAX}$, $\overline{CMIN}$) with average traffic intensities ($\overline{C}$) of all sets, its comparison limits (CMAX, CMIN) with the charge pulse counts of the sets assigned to said group and its observation time ($\Delta T$) common to the sets assigned to said group, means (155, 156) for successive comparing the average traffic intensity ($\overline{C}$) of each set with the average traffic intensity limits ($\overline{CMAX}$, $\overline{CMIN}$) of all the groups, and means (159) assigned to each group for storing under the control of the comparing means (155, 156) the list of addresses of the sets of which average traffic intensity lies between the average traffic intensity limits ($\overline{CMAX}$, $\overline{CMIN}$) of said group and in that said time recording means (16) control, in response to the periodic detection of the end (HF) of the observation period common to the sets assigned to a group, the successive reading of addresses of sets in the list storing means (159) assigned to said group in order to connect successively the outputs (110) of the counting means (11) of the sets addressed in accordance with said list of the group, to the inputs of the analysing means (18) in which all the charge counts (C) relating to the sets of said group are compared with at least the count limits (CMAX, CMIN) of said group.

5. Traffic analysing apparatus as claimed in claim 4, characterised in that it comprises means (13, 14) for changing the assignment of a set in relation to the address lists of the groups in response to the modification of its average traffic intensity ($\overline{C}$) following evolution of its traffic.

6. Traffic analysing apparatus as claimed in any one of claims 1 to 5, characterized in that it comprises means (171, 173, 5) for transmitting at least the address of the set, the analysed charge pulse count and the signal characterising the operation state of the set to the local recording means (173) or remote recording means (3) in response to said coded signal transmitted by the coding means (182).

7. Traffic analysing apparatus as claimed in claims 4 and 6, characterized in that said transmitting means (170, 5) also transmit the address of the group (G) to which said set belongs, and/or one of the characteristic data ($\overline{CMAX}$, $\overline{CMIN}$, CMAX, CMIN, $\Delta T$) of said group and/or the hour and the date of the end of the observation period of said set in response to said coded signal.

8. Traffic analysing apparatus as claimed in any one of claims 1 to 7, characterized in that it comprises means (173) for displaying the results of the comparisons of each charge pulse count, either in alphanumeric form or in the form of indicator lamp placed on a card which reproduces the geographic positions of said telephone sets.

9. Remote monitoring system for analysing the traffic of public telephone sets served from a plurality of telephone exchanges (2), characterized in that it comprises, assigned to each exchange (2), a traffic analysing apparatus (1) as claimed in any one of claims 1 to 8 for analysing the charge pulse counts of the telephone sets (P) served from the exchange and a terminal (3) receiving from the traffic analysing apparatus (1) through bidirectional telephone channels (4) at least the result of the comparisons of each charge pulse count (C) with the count limits (CMAX, CMIN) specific to said sets.

10. Remote monitoring system as claimed in claim 9, characterized in that said terminal (3) comprises means for controlling through the telephone channels (4) said distributing means (15) of the traffic analysing apparatus (1) in order to modify the assignment of sets in relation to the groups (G) and at least the counting means (11) in order to transmit the charge pulse counts to the terminal (3) in real time.

11. Use of the traffic analysing apparatus as claimed in any one of claims 1 to 8 in a remote monitoring system for analysing the traffic of public telephone sets served from a plurality of first telephone exchanges (CL), the latter being served from second telephone exchanges (CP), characterized in that said set charge pulse detecting means (10′) are connected to a first, resp. second exchange (CL) and are included in first means (TL, TL′) for transmitting through a first telephone channel (4$_L$) the address of said first, resp. second exchange (CL, CP) and the address of one of said sets (P, Z; P′) in response to the detection of a charge pulse assigned to said set, in that said charge pulse counting means (11′) assigned to the sets (P, Z; P′) served from the first exchanges served from a second exchange, resp. from a second exchange (CP) are included in the second means (TS) connected to the second exchange (CP) for controlling the incrementation of the counting means (11′) assigned to each set in response to the detection of the address of said set (P, P′) and of the address of the first, resp. second exchange (CL, CP) serving said set, and in that the analysing means (18, 12$_A$) of the analysing apparatus successively receive the charge pulse counts (C) from the counting means (11′) under the control of the time recording means (16, 12$_A$) through second bidirectional telephone channels (4$_P$).

## Patentansprüche

1. Prüfvorrichtung für den Telefonverkehr über öffentliche Fernsprechapparate mit jedem Fernsprechapparat (P) zugeordneten Einrichtungen (10) zum Erfassen der Gebührenimpulse, welche über die dem Fernsprechapparat von seiner Vermittlungszentrale (2) zugeordeneten Gebührenleitungen (E) übertragen werden, und mit Zähleinrichtungen (11) für die erfaßten Gebührenimpulse, gekennzeichnet durch Speichereinrichtungen (15) für die Adressen der Fernsprechapparate, für die Vergleichsgrenzen (CMAX, CMIN) der Gebührenzählungen (C) der Fernsprechapparate und für die Zeitspannen (ΔT) der Beobachtungsperioden der Fernsprechapparate (P) sowie durch Zeitbestimmungseinrichtungen (16) für die periodische Erfassung des Endes (HF) jeder Beobachtungsperiode jedes Fernsprechapparates, durch Auswertungseinrichtungen (18) für die Gebührenzählungen, welche selektiv mit den Ausgängen (110) der Zähleinrichtungen (11) unter Steuerung der Zeitbestimmungseinrichtungen (16) verbunden sind und jede in der Zähleinrichtung eines Fernsprechapparates erfaßte Gebührenzählung (C) mit mindestens zwei für den bestimmten Fernsprechapparat spezifischen Grenzwerten (CMAX, CMIN) am Ende einer beobachtungsperiode vergleichen, sowie durch mit den Vergleichseinrichtungen verbundenen Kodiereinrichtungen (182), welche ein kodiertes Signal erzeugen, das die Art der Funktionsabweichung des Fernsprechapparates angibt, dessen Gebührenzählung (C) oberhalb des einen (CMAX) oder unterhalb des anderen (CMIN) Grenzwertes der für den bestimmten Fernsprechapparat spezifischen Zählung liegt.

2. Prüfvorrichtung für den Telefonverkehr nach Anspruch 1, dadurch gekennzeichnet, daß die Auswerteeinrichtungen (18) jede ausgewertete Gebührenzählung (C) gleichfalls mit dem Einheitswert vergleichen, damit die Kodiereinrichtungen (182) ein kodiertes Signal erzeugen, welches anzeigt, daß der zugeordnete Fernsprechapparat außer Funktion ist, wenn die Gebührenzählung Null beträgt.

3. Prüfvorrichtung nach Anspruch 1 oder 2, dadurch gekennzeichnet, daß die Kodiereinrichtungen (182) ein kodiertes Signal erzeugen, welches anzeigt, daß der ausgewertete Fernsprechapparat normal funktioniert, wenn seine Gebührenzählung (C) innerhalb der Grenzwerte (CMAX, CMIN) liegt.

4. Prüfvorrichtung nach einem der Ansprüche 1 bis 3, gekennzeichnet durch Einrichtungen (15), welche die Fernsprechapparate (P) in Prüfgruppen (G) in Abhängigkeit von ihrem mittleren Verkehrsaufkommen ($\overline{C}$) einteilen und auswerten, wobei die Verteilereinrichtungen mit Speichereinrichtungen (151) für das mittlere Verkehrsaufkommen der Fernsprechapparate, mit Speichereinrichtungen (150), die für jede Prüfgruppe ihre Adresse gemeinsam mit ihren Vergleichsgrenzen ($\overline{CMAX}$, $\overline{CMIN}$) für das mittlere Verkehrsaufkommen ($\overline{C}$) aller Fernsprechapparate, ihre Vergleichsgrenzwerte (CMAX, CMIN) für die Gebührenzählung der dieser Gruppe zugeordneten Fernsprechapparate und ihre den der Prüfgruppe zugeordneten Fernsprechapparaten gemeinsame Beobachtungsdauer (ΔT) speichern, mit Vergleichseinrichtungen (155, 156) für das aufeinanderfolgende Vergleichen des mittleren Verkehrsaufkommens ($\overline{C}$) jedes Fernsprechapparates mit den mittleren Verkehrsdichtegrenzwerten ($\overline{CMAX}$, $\overline{CMIN}$) aller Prüfgruppen, und mit jeder Prüfgruppe zugeordneten, von den Vergleichseinrichtungen (155, 156) gesteuerten Speichereinrichtungen (159) zum Speichern der Adressenliste der Fernsprechapparate mit mittlerem Verkehrsaufkommen innerhalb der mittleren Verkehrsdichtegrenzwerte ($\overline{CMAX}$, $\overline{CMIN}$) ausgerüstet sind, wobei die Zeitbestimmungseinrichtungen (16) in Abhängigkeit von der periodischen Anzeige des Endes (HF) der gemeinsamen Beobachtungsperiode der einer Prüfgruppe zugeordeneten Fernsprechapparate die nachfolgende Ablesung der Fernsprechapparatadressen in der der Prüfgruppe zugeordneten Speichereinrichtung der Liste (159) steuern, um nacheinander die Ausgänge (110) der Zähleinrichtungen (11) der adressierten Fernsprechapparate gemäß der Prüfgruppenliste mit den Eingängen der Auswerteeinrichtungen (118) zu verbinden, in welchen alle Gebührenzählungen (C) der Fernsprechapparate der Prüfgruppe wenigstens mit den Zählwertgrenzen (CMAX, CMIN) der Prüfgruppe verglichen werden.

5. Prüfvorrichtung für den Telefonverkehr nach Anspruch 4, dadurch gekennzeichnet, daß Einrichtungen (13, 14) vorgesehen sind, mit denen die Zuordnung eines Telefonapparates zu den den Prüfgruppen zugeordneten Adressenlisten in Abhängigkeit von einer Veränderung der Größe des mittleren Verkehrsaufkommens ($\bar{C}$) infolge einer Weiterentwicklung des Telefonverkehrs geändert werden kann.

6. Prüfvorrichtung für den Telefonverkehr nach einem der Ansprüche 1 bis 5, dadurch gekennzeichnet, daß Übertragungseinrichtungen (171, 173, 5) vorgesehen sind, mit denen wenigstens die Adresse der Fernsprechapparates, die ausgewertete Gebührenzählung und das den Funktionzustand des Fernsprechapparates charakterisierende Signal an örtliche (173) oder entfernte (3) Registriereinrichtungen in Abhängigkeit von dem von den Kodiereinrichtungen (182) übertragenen kodierten Signal übertragen werden können.

7. Prüfvorrichtung für den Telefonverkehr nach einem der Ansprüche 4 bis 6, dadurch gekennzeichnet, daß die Übertragungseinrichtungen (170, 5) auch die Prüfgruppenadresse des betreffenden Fernsprechapparates und/oder die betreffende Prüfgruppe charakterisierende Daten ($\overline{CMAX}$, $\overline{CMIN}$, CMAX, CMIN, $\Delta T$) und/oder die Zeit und das Datum des Endes der Beobachtungsperiode des Fernsprechapparates in Abhängigkeit von dem kodierten Signal übertragen.

8. Prüfvorrichtung für den Telefonverkehr nach einem der Ansprüche 1 bis 7, dadurch gekennzeichnet, daß Anzeigevorrichtungen (173) die Vergleichsergebnisse für jede Gebührenzählung sichtbar machen entweder in alphanumerischer Form oder als Leuchtzeichen, die auf einer die geographische Verteilung der Fernsprechapparate wiedergebenden Karte verteilt sind.

9. Fernüberwachungseinrichtung zur Prüfung des Telefonverkehrs über öffentliche Telefonapparate (P), welche durch eine Vielzahl von Telefonvermittlung (2) versorgt werden, dadurch gekennzeichnet, daß eine Prüfvorrichtung (1) für den Telefonverkehr nach einem der Ansprüche 1 bis 8 zur Auswertung der Gebührenzählungen der von der zugehörigen Telefonvermittlung versorgten Fernsprechapparate (P) und ein Terminal (3) jeder Telefonvermittlungsstelle (2) zugeordnet sind, wobei das Terminal (3) von den Prüfvorrichtungen (1) über die Zweirichtungs-Telefonkanale (4) mindestens das Ergebnis der Vergleiche zwischen jeder Gebührenzählung (C) und den für die betreffenden Fernsprechapparate spezifischen Zählungsgrenzen (CMAX, CMIN) aufnimmt.

10. Fernüberwachungseinrichtung nach Anspruch 9, dadurch gekennzeichnet, daß das Terminal (3) Steuereinrichtungen aufweist, mit denen über die Telefonkanale (4) die Zuweisungseinrichtungen (15) der Prüfvorrichtungen (1) im Hinblick auf die Veränderung der Zuweisung der Telefonapparate relativ zu den Prüfgruppen (G) und wenigstens die Zahleinrichtungen (11) im Hinblick auf die Realzeitübertragung der Gebührenzählungen (C) an das Terminal steuern.

11. Verwendung der Prüfvorrichtung für den Telefonverkehr gemäß einer der Ansprüche 1 bis 8 in einer Fernüberwachungsanlage zur Auswertung des Telefonverkehrs über öffentliche Telefonapparate, die von mehreren ersten Telefonvermittlungsstellen (CL) und diese von mehreren zweiten Telefonvermittlungsstellen (CP) versorgt werden, dadurch gekennzeichnet, daß die Erfassungseinrichtungen (10') für die Gebührenimpulse der Telefonapparate (P, P') in einer ersten bzw. zweiten Vermittlungsstelle (CL) untergebracht und in den ersten Übertragungseinrichtungen (TL, TL') zur Übertragung der Adresse der ersten bzw. zweiten Vermittlungsstelle (CL, CP) sowie die Adresse eines der Fernsprechapparate (P, Z; P') über einen ersten Telefonkanal ($4_L$) in Abhängigkeit von der Erfassung eines dem Fernsprechapparat zugeordneten Gebührenimpulses enthalten sind, und daß die Zähleinrichtungen (11') für die den Fernsprechapparaten (P, Z; P'), die den von einer zweiten Vermittlungsstelle bedienten ersten Vermittlungsstellen bzw. von einer zweiten Vermittlungsstelle (CP) bedient werden, zugeordneten Gebührenimpulsen in den mit der zweiten Vermittlungsstelle (CP) verbundenen zweiten Steuereinrichtungen (TS) enthalten sind, welche eine Inkrementierung der jedem Fernsprechapparat zugeordneten Zähleinrichtungen (11') in Abhängigkeit von der Erfassung der Adresse des Fernsprechapparates (P, P') und der Adresse der ersten bzw. zweiten Vermittlungsstelle (CL, CP) welche den Fernsprechapparat bedienen, steuern, enthalten sind, und daß die Auswerteeinrichtungen (18, $12_A$) der Prüfvorrichtungen (A) nacheinander die Gebührenzählungen (C) von den Zähleinrichtungen (11') unter Steuerung der Zeitbestimmungseinrichtungen (16, $12_A$) über zweiten Zweirichtungs-Telefonkanale ($4_P$) empfangen.

FIG.1

FIG.2

# FIG.3

ΔT₁ à ΔTₙ
de 150 (Fig.2)

RAZ et lecture de 13 (Fig.2)

vers 13 (Fig.2)

16

162₁

136₁ à 136ₙ

CCT. D'HORODATAGE

162ₙ

1622    1623

1621    HF    1624

163

HF

vers 170 (Fig. 4)

ΔT₁'

ΔTₙ'

1600

1620'

ΔTₙ

162ₙ

HORODATEUR

HR    1620'    CCT. D'HORODATAGE

160

RAZ et lecture de 13 (Fig.2)

161    DR

DR

vers 170 (Fig.4)

CCT D'INITIALISATION D'ANALYSE

3

0 004 497

# FIG.4

RAZ et lecture de 13 (Fig.2)

de 150, 163, 161 (Figs. 2, 3)

| G |
| CMAX |
| CMIN |
| CMAX |
| CMIN |
| ΔT |
| HF |
| DR |

170

172

MULTIPLEXEUR

173

AFFICHAGE LOCAL

vers 5 (Fig.1)

CCT DE TRANS-MISSION DE DONNÉES

17

RAZ et lecture de 13 (Fig.2)

de 159, 151 (Fig.2)

171

| P |
| $\overline{C}$ |
| C |

RAZ de 13 (Fig.2)

CCT D'ANALYSE DE TRAFIC

CCT D'ACCÈS 181

18

$(C_1)$  $11_1$

$(C_m)$  $11_m$

$(C_M)$  $11_M$

COMPTEURS

$110_1$  $1811_1$

$110_m$  $1811_m$

$110_M$  $1811_M$

1812

lecture

RAZ de 13 (Fig.2)

$(P)$ de 159'' (Fig.2)

REGISTRE RÉPARTITEUR

1810

de 150 (Fig.2)

RAZ de 13

CMAX  $180max$

RAZ

CMIN  $180min$

C=1  $180_1$

$180'max$   C>CMAX

$180'min$   C<CMIN

$180'_1$   C=0

1820  lecture   résultat des comparaisons

182

DÉTECTEUR-CODEUR

138  fin d'analyse de et vers 13 (Fig.2)

CCT DE COMPARAISON   180

0004 497

4

FIG.5 — POSTES TELEPHONIQUES — 0 004 497

FIG.6

FIG.7

TRANSMETTEUR LOCAL

de CL

10'    62    61

REGISTRE DE L'ADRESSE DU CENTRAL LOCAL (CL)

REGISTRE DES ADRESSES DES POSTES

60

MULTIPLEXEUR

62

CCT D'EMISSION

63

4_L

TL (ou TL')

DETECTEURS D'IMPULSIONS DE TAXE

FIG.8

TS

TRANSMETTEUR DE SURVEILLANCE

REPARTITEUR

710

UNITE DE COMMANDE

14'    CLAVIER    AFFICHAGE LOCAL    173'

71

711

DETECTEUR DES ADRESSES DES CENTRAUX LOCAUX

712

DETECTEUR DES ADRESSES DES POSTES

COMPTEUR

11"

COMPTEUR

COMPTEUR

CCT D'ACCES

72

181' CCT D'EMISSION ET DE RECEPTION

4_P

de CP

MULTIPLEXEUR-DECODEUR

70

TRANS-METTEUR LOCAL

TL'

0 004 497